# EUROPÄISCHE PATENTANMELDUNG

(11) **EP 3 057 011 A1**
(43) Veröffentlichungstag der Anmeldung: **17.08.2016**
(21) Anmeldenummer: 15000433.1
(22) Anmeldetag: 12.02.2015
(51) Int. Cl.: G06F 17/50

(54) **Herstellen einer Maschine mit abstrakter Komponente**

(71) Anmelder: Siemens Aktiengesellschaft, 80333 München (DE)
(72) Erfinder: Frank, Gernot, 75365 Calw (DE)

(57) **Zusammenfassung**

Das Herstellen von Maschinen soll vereinfacht werden. Daher werden eine Vorrichtung und ein Verfahren bereitgestellt, bei denen zunächst eine Schnittstelle (S) zwischen einer konkreten Ausgestaltung (KA1) einer ersten Komponente und einer zweiten Komponente, welche noch nicht konkret ausgestaltet ist, vorgegeben wird. Außerdem wird ein Lösungsprinzip (LP2) für die zweite Komponente der Maschine vorgegeben. Automatisiert wird daraufhin eine abstrakte Ausgestaltung (BB) der zweiten Komponente anhand des Lösungsprinzips (LP2) und der Schnittstelle (S) ermittelt. Schließlich wird die Maschine mit einer konkreten Ausgestaltung der zweiten Komponente auf der Basis der abstrakten Ausgestaltung (BB) gefertigt.

## Beschreibung

Die vorliegende Erfindung betrifft ein Verfahren zum Herstellen einer Maschine. Darüber hinaus betrifft die vorliegende Erfindung eine entsprechende Vorrichtung zum Herstellen einer solchen Maschine.

Maschinenbauunternehmen müssen aufgrund von vor allem kostengetriebenem Wettbewerb besonders Entwicklungsaufwände reduzieren. Ein Weg scheint eine Modularisierungsstrategie zu sein. Diese ist allerdings mit erheblichen Aufwänden zur Standardisierung verbunden, was nur durch entsprechende Stückzahlen amortisiert werden kann. Gerade im Bereich der mechatronischen Modularisierung lohnt sich dies erst bei sehr hohen Stückzahlen der einzelnen Module. Dabei wird aber kein Aufwand in der Entwicklung, sondern vielmehr im Bereich der Auftragsabwicklung und Produktion eingespart. Es muss also folglich eine Lösung der mechatronischen Modularisierung auch im Bereich des Maschinenbaus mit geringen Stückzahlen erfolgen. Ziel solcher Maschinenbauunternehmen ist hier eine für einen Kunden speziell entwickelte Lösung als "Modul" abzuspeichern und für alle Kunden als Option zugänglich zu machen. Dies ist derzeit nur durch äußerst hohen manuellen Aufwand möglich, da keine Softwareunterstützung vorhanden ist.

Maschinenentwicklungsprozesse beginnen üblicherweise mit der Aufnahme der Anforderung des Kunden bzw. des Marktes. Um diesen Anforderungen gerecht zu werden, muss der Maschinenhersteller entweder Neuentwicklungen anstoßen oder auf Basis seiner bisherigen Maschinen- oder Modulentwicklungen jene identifizieren, welche diese Anforderungen am besten erfüllen. Diese Tätigkeit ist heutzutage sehr erfahrungsbasiert, was schnell auch zu existenzbedrohenden Zuständen führen kann, wenn beispielsweise eine Maschine angepasst werden muss, sich aber im Nachhinein herausstellt, dass die Anpassung mehr Geld kostet als damit erwirtschaftet wird. Solche Anpassungen können beispielsweise durch Inkompatibilitäten von Modulen hervorgerufen werden.

Neben der erfahrungsbasierten Herangehensweise ist es möglich, beispielsweise Maschinen in Produktkatalogen mit den wichtigsten Merkmalen zu beschreiben und so eine bestmögliche Auswahl der richtigen Maschine oder Module zu finden. Weiterhin werden Ansätze der Klassifikation genutzt, um Einschränkungen bei der Suche von konkreten Modulen oder Ausprägungen zu erreichen (vgl. beispielsweise http://www.eclass.de/).

Der Einsatzbereich der vorliegenden Erfindung ist sehr weitreichend. Grundsätzlich lässt sich damit beinahe jede Maschine herstellen. Besonders vorteilhaft ist natürlich die Herstellung von Sondermaschinen mit geringer Stückzahl. Bei diesen Maschinen ist der Entwicklungsaufwand gegenüber den übrigen Herstellungskosten verhältnismäßig hoch. Ein typisches Beispiel einer solchen Sondermaschine wäre eine Firmwarelademaschine, von denen weltweit nur sehr wenige hergestellt werden. Eine weitere Möglichkeit für den Einsatz der vorliegenden Erfindung wäre bei der Herstellung von Maschinen denkbar, die zur Schleifwalzenproduktion dienen. Es können aber auch Großmaschinen und Anlagen von der Erfindung profitieren, wie etwa Reifenproduktionsmaschinen, Gepäckförderanlagen und dergleichen. Darüber hinaus können auch beispielsweise spezielle Roboter oder Werkzeugmaschinen mit dem erfindungsgemäßen Verfahren hergestellt werden.

Die Aufgabe der vorliegenden Erfindung besteht somit darin, die Herstellung einer Maschine zu vereinfachen. Dementsprechend soll ein Verfahren und eine Vorrichtung angegeben werden, um dieses Ziel zu erreichen.

Erfindungsgemäß wird diese Aufgabe gelöst durch ein Verfahren zum Herstellen einer Maschine
durch
- Vorgeben einer Schnittstelle zwischen einer konkreten Ausgestaltung einer ersten Komponente und einer zweiten Komponente, welche noch nicht konkret ausgestaltet ist, oder einer abstrakten Schnittstelle zwischen der ersten und zweiten Komponente, welche noch nicht konkret ausgestaltet ist aber eine Klassifizierung besitzt, auf der Basis dieser Klassifizierung,
- Vorgeben eines Lösungsprinzips für die zweite Komponente der Maschine,
- automatisiertes Ermitteln einer abstrakten Ausgestaltung der zweiten Komponente anhand des Lösungsprinzips und der Schnittstelle und
- Fertigen der Maschine mit einer konkreten Ausgestaltung der zweiten Komponente auf der Basis der abstrakten Ausgestaltung.

Darüber hinaus wird erfindungsgemäß bereitgestellt eine Vorrichtung zum Herstellen einer Maschine
umfassend
- eine Ermittlungseinrichtung zum automatisierten Ermitteln einer abstrakten Ausgestaltung einer zweiten Komponente der Maschine, welche Komponente noch nicht konkret ausgestaltet ist, anhand eines vorgegebenen Lösungsprinzips und einer vorgegebenen Schnittstelle zwischen der zweiten Komponente und einer konkret ausgestalteten ersten Komponente der Maschine und
- eine Fertigungseinrichtung zum Fertigen der Maschine mit einer konkreten Ausgestaltung der zweiten Komponente, die auf der abstrakten Ausgestaltung beruht.

In vorteilhafter Weise wird also bei dem Herstellen der Maschine zunächst von einem Lösungsprinzip ausgegangen, das mit einer zweiten Komponente der Maschine, welche zweite Komponente noch nicht konkret ausgestaltet ist, realisiert werden kann. Als weitere Randbedingung bei dem konkreten Ausgestalten der zweiten Komponente wird eine Schnittstelle vorgegeben, die zwischen der zweiten Komponente und einer bereits konkret ausgestalteten ersten Komponente vorliegen muss. Alternativ ist es sogar möglich durch abstrakte Schnittstellendefinition und Klassifizierung dies zu tun, ohne eine erste Komponente konkret ausgestaltet zu haben, und so eine Vorauswahl zu präsentieren. Danach würde dann für die anderen Komponenten dieser Anwendungsfall zum Tragen kommen. Aufgrund dieser Randbedingungen betreffend das Lösungsprinzip und die Schnittstelle kann nun automatisiert, d. h. vollautomatisch oder teilautomatisch, eine abstrakte Ausgestaltung (hier auch "Black Box" genannt) der zweiten Komponente ermittelt werden. Diese Black Box wirkt wie eine konkrete Ausgestaltung. Auf der Basis der abstrakten Ausgestaltung kann später eine konkrete Ausgestaltung der zweiten Komponente gefunden werden, mit der sich die Maschine fertigen lässt. Der besondere Vorteil liegt darin, dass die Maschine mit der abstrakten Ausgestaltung der zweiten Komponente bzw. der Black Box weiterentwickelt werden kann, ohne die konkrete Ausgestaltung der zweiten Komponente zu kennen. Dies ist insbesondere dann vorteilhaft, wenn bei der Entwicklung der Maschine mehrere Disziplinen (Mechanik, Elektrik, Automatisierung) beteiligt sind und die jeweiligen Entwickler auf den Fortschritt der anderen Disziplinen angewiesen sind.

In einer Ausführungsform wird die konkrete Ausgestaltung der zweiten Komponente dadurch erreicht, dass eine Bibliothek mit Bezug auf die abstrakte Ausgestaltung durchsucht wird. Dies ist beispielsweise dadurch möglich, dass eine sogenannte Integrationsapplikation, mit der die Modelle in den einzelnen Disziplinen verwaltet werden können, konkrete Ausgestaltungen für die Black Box aus der Bibliothek ermittelt und vorschlägt. Der Nutzer kann sich entsprechend rasch und zuverlässig für eine geeignete Realisierungsvariante entscheiden.

Das Lösungsprinzip kann eine mechanische, elektrische oder steuerungstechnische Funktion umsetzen. Das Lösungsprinzip ist demnach bereits eine bekannte technische Umsetzung, um die gewünschte Funktion durchzuführen. Beispielsweise handelt es sich bei der Funktion um die Tätigkeit "Greifen". Ein korrespondierendes Lösungsprinzip wäre ein Greifer, der eine solche Funktion ausführt.

Die konkrete Ausgestaltung der zweiten Komponente der Maschine kann ein elektrisches Modell und/oder ein mechanisches Modell und/oder ein Automatisierungsmodell aufweisen. Mit dem entsprechenden Lösungsprinzip ergibt sich somit ein mechatronisches Modul, welches für weitere konkrete Ausgestaltungen genutzt werden kann. Prinzipiell kann die konkrete Ausgestaltung aber auch nur beispielsweise aus einem mechanischen oder einem elektrischen Modell bestehen. Auch auf dieser Basis können entsprechende Module gebildet werden.

Die Schnittstelle zwischen der ersten Komponente und der zweiten Komponente, die als Randbedingung für die zweite Komponente gilt, kann einen Transport eines Materials und/oder eine Übertragung eines elektrischen Signals betreffen. Mittels der Schnittstelle kann somit nicht nur der rein materielle Ein- und Ausgang einer abstrakten Komponente bzw. Black Box definiert werden, sondern auch der Ein- und Ausgang von Informationen in oder aus der Black Box.

Das Lösungsprinzip kann in einer Bibliothek einer Klasse von mechatronischen Modulen zugeordnet werden. Ist dies der Fall, so kann bei der Suche nach einer konkreten Ausgestaltung des Lösungsprinzips zielgerichtet in einer Klasse einer Bibliothek gesucht werden. Diese Zuordnung hat aber noch einen weiteren Vorteil, nämlich dann, wenn manuell aus der abstrakten Ausgestaltung die konkrete Ausgestaltung gebildet wird und aufgrund der Zuordnung nun automatisch ein entsprechendes mechatronisches Modul in der Klasse erzeugt werden kann. Dies bedeutet, dass die Arbeit auf Ausgestaltungsebene automatisch in die Bibliotheksebene übernommen werden kann.

Darüber hinaus können für das automatische Erzeugen des mechatronischen Moduls eine Relation zwischen dem Lösungsprinzip und der Klasse in der Bibliothek sowie eine Relation zwischen Modellen der konkreten Ausgestaltung der zweiten Komponente und einer Instanz der Klasse in der Bibliothek gezogen werden. Gegebenenfalls besitzen die Relationen jeweils eine bestimmte Semantik wie beispielsweise "ist äquivalent zu" oder "wird realisiert durch". Durch diese Relationen kann ein semantisches Netz aufgebaut werden, welches nicht nur bei der Entwicklung der Maschine, sondern auch bei späteren Änderungen sehr hilfreich sein kann. Insbesondere können dadurch die Zusammenhänge rasch erkannt werden, wenn beispielsweise Komponenten geändert oder gelöscht werden.

Die oben in Zusammenhang mit dem erfindungsgemäßen Verfahren geschilderten Merkmale können auch als funktionelle Merkmale in der erfindungsgemäßen Vorrichtung realisiert werden.

Die vorliegende Erfindung wird nun anhand der beigefügten Zeichnungen näher erläutert, in denen zeigen:
- FIG 1: eine Implementierung zur Erstellung mechatronischer Module;
- FIG 2: einen Ablauf zur Nutzung mechatronischer Objekte;
- FIG 3: die Nutzung einer Black Box für eine konkrete Ausgestaltung; und
- FIG 4: einen Ablauf zur Ausgestaltung mechatronischer Module während des Projekts und deren gleichzeitige Definition in der Bibliothek.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder anderen technisch sinnvollen Kombinationen realisiert werden können.

Es soll eine Maschine bzw. eine Anlage, z. B. eine Werkzeugmaschine oder ein Roboter, (nachfolgend einfach Maschine genannt) hergestellt werden. Dazu ist es notwendig, diese Maschine zunächst zu entwerfen und den resultierenden Entwurf entsprechend zu fertigen.

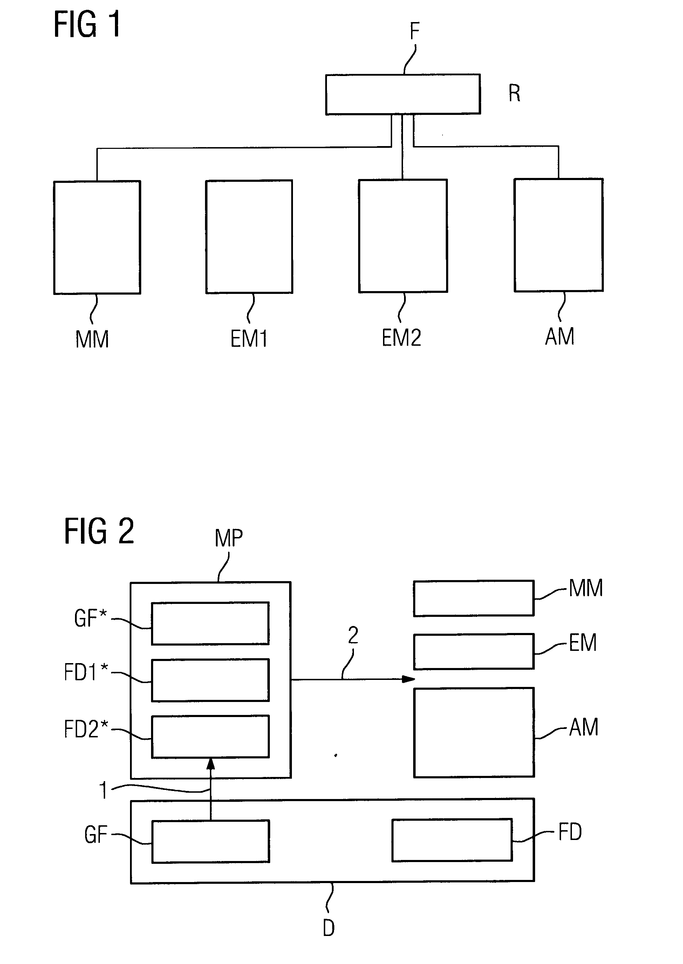

Ausgangspunkt für den Entwurf ist eine mechatronische Modularisierung, wonach Modelle der Mechanik, der Elektrik und/oder der Automatisierung über einen "funktionalen" Zusammenhang zusammengestellt werden. Dies ist in FIG 1 aufgezeigt. Beispielsweise soll die Funktion F "Greifer" technisch realisiert werden. Dazu wurden bislang die disziplinspezifischen Modelle (mechanisches Modell MM, erstes elektrisches Modell EM1, zweites elektrisches Modell EM2 und Automatisierungsmodell AM) auf mechatronische Abhängigkeiten aufwendig untersucht und die entsprechenden Parameter der Funktion zugeführt. Beispielsweise wird die Länge des Greifers als Parametrierung an die Funktion F geschrieben. Abhängig von diesen Parametern werden Regeln R in den disziplinspezifischen Modellen MM, EM1, EM2 und AM definiert, wie beispielsweise dass ab einer Länge von 1 m nicht mehr das elektrische Modell EM1 sondern das zugehörige Modell EM2 genutzt werden muss. Es ist offensichtlich, dass es enorm aufwendig ist, alle nur erdenklichen Regeln vorab zu definieren, um mechatronische Module zu beschreiben.

Zur Nutzung solcher in FIG 1 beispielhaft dargestellten Module (es müssen nicht genau die aufgeführten Modelle enthalten sein; in der Regel ist mindestens ein mechanisches Modell, ein elektrisches und ein Automatisierungsmodell vorhanden) im Falle einer Maschinenentwicklung bzw. Auftragsabwicklung sollten die beschriebenen Module gemäß FIG 2 in einer Datenbank D abgelegt werden. Im Beispiel von FIG 2 ist in der Datenbank D ein Modul für einen Greifer GF und ein Modul für einen Förderer FD hinterlegt. Beim Anlegen eines Maschinenprojekts MP werden die verschiedenen Funktionen bzw. Module instanziiert, was durch den Pfeil 1 angedeutet ist. Im vorliegenden Fall wird ein Greifer GF*, ein erster Förderer FD1* und ein zweiter Förderer FD2* instanziiert. Anschließend erfolgt eine Parametrierung aufgrund der in allen Tools (beispielsweise mechanisches CAD, elektrisches CAD und Automatisierungsprogrammierumgebung wie beispielsweise TIA-Portal) die jeweiligen Modelle MM, EM und AM generiert werden, was Pfeil 2 andeutet.

Diesen Ansatz verfolgen verschiedene Projekte, Produkte und Standards (vgl. VDW-Richtlinie "Funktionsbeschreibung"; Förderal-Projekt des VDMA - http://www.vdma-verlag.com/home/p105.html).

In all diesen Fällen müssen bei einer auftragsbezogenen Zusammenstellung quasi alle Module bzw. Komponenten vorab entsprechend definiert sein, was im Entwicklungsprozess der gesamten Maschine unter Umständen zu Problemen führt. Wenn beispielsweise nämlich eine Komponente elektrisch noch nicht ausspezifiziert ist, sollte dies kein Grund dafür sein, dass das gesamte Entwicklungsprojekt an dieser Stelle nicht weiterläuft. Deshalb wird hier vorgeschlagen, dass die Entwicklung mit einem abstrakten Modul bzw. einer abstrakten Ausgestaltung (Black Box) weitergeführt wird.

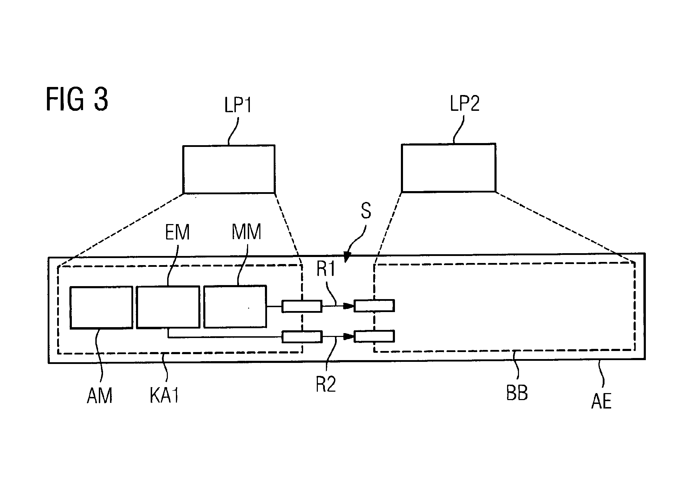

FIG 3 zeigt ein Beispiel für die Nutzung einer solchen Black Box. Ausgangspunkt ist beispielsweise ein erstes Lösungsprinzip LP1, mit dem eine erste Funktion technisch ausführbar ist. Darüber hinaus soll die zu entwickelnde Maschine noch eine zweite Funktion ausführen, die technisch mit dem zweiten Lösungsprinzip LP2 umsetzbar ist.

Die fertig entwickelte Maschine soll nun eine erste Komponente erhalten, die das erste Lösungsprinzip realisiert und eine zweite Komponente, die das zweite Lösungsprinzip realisiert. Auf einer Ausgestaltungsebene AE ist bereits für die erste Komponente eine konkrete Ausgestaltung KA1 gefunden worden. Diese konkrete Ausgestaltung KA1 stellt zusammen mit dem ersten Lösungsprinzip LP1 ein mechatronisches Modul dar.

Ferner besitzt die konkrete Ausgestaltung KA1 ein Automatisierungsmodell AM, ein elektrisches Modell EM und ein mechanisches Modell MM. Nun sind durch die einzelnen Modelle auch spezifische Eingänge in die konkrete Ausgestaltung KA1 und Ausgänge aus der konkreten Ausgestaltung KA1 definiert. Dies bedeutet, dass die konkrete Ausgestaltung KA1 zu anderen Modulen bzw. zu anderen Ausgestaltungen eine definierte Schnittstelle S besitzen muss. In dem konkreten Beispiel von FIG 3 soll die erste Komponente mit der konkreten Ausgestaltung KA1 nach außen Material übergeben. Dazu besitzt die Schnittstelle S eine Relation R1 mit der Semantik "übergibt Material", die dies beschreibt. In der konkreten Ausgestaltung KA1 besteht eine korrespondierende Verknüpfung von dieser Relation R1 zu dem mechanischen Modell MM.

Darüber hinaus wird von dem Elektrikmodell EM ein Signal produziert, das von der ersten Komponente ausgegeben werden soll. Daher besitzt die konkrete Ausgestaltung KA1 einen entsprechenden Signalausgang, der auf Ausgestaltungsebene AE zu einer Relation R2 führt, die ebenfalls Teil der Schnittstelle S ist. Die zweite Relation R2 besitzt beispielsweise die Semantik "kommuniziert über Signale".

Der Entwickler steht nur vor der Aufgabe, auch für das zweite Lösungsprinzip LP2 in der Ausgestaltungsebene AE eine konkrete Ausgestaltung zu finden, die für die Fertigung der Maschine notwendig ist. Es muss also ein mechatronisches Objekt gefunden werden, welches den Randbedingungen genügt, die durch das zweite Lösungsprinzip LP2 und die Schnittstelle S gegeben sind. Für die weitere Entwicklung der Maschine ist es aber zunächst nur wichtig, dass die Wirkung des Objekts in seiner Umgebung festgelegt wird. Wenn aber beispielsweise eines der Modelle AM, EM oder MM noch nicht ausreichend konkretisiert ist, steht keine konkrete Ausgestaltung für das zweite Lösungsprinzip zur Verfügung. Daher bedient man sich hier erfindungsgemäß einer sogenannten abstrakten Ausgestaltung oder einer Black Box BB, die sämtlichen Randbedingungen genügt. Dies bedeutet, dass sie unter das zweite Lösungsprinzip LP2 subsumiert werden kann und auch kompatibel ist mit der Schnittstelle S. Im konkreten Fall heißt dies, dass die Black Box BB die Funktion des Lösungsprinzips LP2 ausführen muss und gleichzeitig das Material von der konkreten Ausgestaltung KA1 gemäß Relation R1 übernimmt sowie die Signale von der konkreten Ausgestaltung KA1 aufnimmt. Mit der abstrakten Ausgestaltung bzw. Black Box BB kann nun die Entwicklung der gesamten Maschine fortgesetzt werden.

Das Wirk- bzw. Lösungsprinzip eines Moduls oder einer Maschine kann gleichzeitig als Klassifikation der konkreten Ausgestaltung angesehen werden. In einem Projektkontext der Maschinenentwicklung spannt dieses folglich eine mechatronische Black Box der konkreten Ausgestaltung auf. Dies kann somit als Metainformation der konkreten Ausgestaltung angesehen werden. Dadurch ist es der mechatronischen Integrationsapplikation möglich, dem Nutzer verschiedene bereits existierende Alternativen direkt in seinem Projektkontext vorzuschlagen. Durch einfaches Auswählen kann das entsprechende Bibliothekselement in allen disziplinspezifischen Tools instanziiert werden.

Ein besonderer Vorteil liegt in der Kombination aus Klassifikation von konkreten Ausgestaltungen zusammen mit einer im Projektkontext notwendigen Beschreibung des Systemsentwurfs (Lösungsprinzip/Wirkprinzip/Funktion). Dadurch erreicht man zum einen einen definierten Projektbereich bezogen auf einen Systementwurf sowie eine sehr einfache mechatronische Wiederverwendung von Modulen, was erheblichen Aufwand einspart. Des Weiteren kann eine deutlich erhöhte Wiederverwendung von Modulen erreicht werden, da diese systemunterstützt vorgeschlagen werden können.

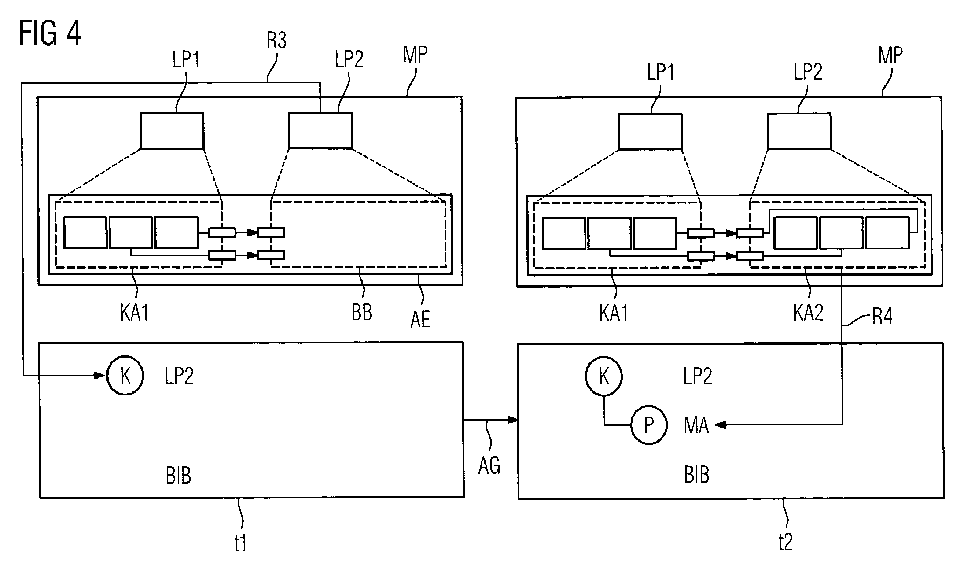

In FIG 4 ist nun der Ablauf zur Ausgestaltung mechatronischer Module während des Maschinenprojekts MP und deren gleichzeitige Definition in der Bibliothek BIB schematisch dargestellt. Das Maschinenprojekt MP links oben im Bild von FIG 4 entspricht demjenigen Bild von FIG 3. Es ist also für das zweite Lösungsprinzip LP2 eine abstrakte Ausgestaltung bzw. eine Black Box BB vorhanden, während für das erste Lösungsprinzip LP1 eine konkrete Ausgestaltung KA1 besteht.

Mit anderen Worten wird durch eine explizite Modellierung des Wirk- bzw. Lösungsprinzips von Modulen oder Maschinen eine Black Box BB der konkreten Ausgestaltung in der Ausgestaltungsebene aufgespannt. Ist kein passendes mechatronisches Modul vorhanden, so wird der Lösungsraum (Black Box BB) in der mechatronischen Integrationsapplikation für dieses Lösungsprinzip entsprechend aufgespannt.

Über interdisziplinäre UIs (User Interfaces) ist es nun möglich, während des weiteren Projektfortschritts auf dieses Wirkprinzip zu gehen und dort die notwendigen, zugehörigen, disziplinspezifischen Planungen einzusehen und mit den disziplinspezifischen Ausgestaltungen in dem disziplinspezifischen Tool zu verknüpfen. Im Beispiel von FIG 4 wird dazu die Black Box BB, die noch in dem Status zum Zeitpunkt t1 besteht, durch eine konkrete Ausgestaltung KA2 zum späteren Zeitpunkt t2 ersetzt, wie dies in FIG 4 rechts oben zu sehen ist. Durch die Ausgestaltung AG wird also ein erster Status eines Maschinenprojekts MP einschließlich seiner Beziehungen in eine Bibliothek BIB vom Zeitpunkt t1 in einen zweiten Status zum Zeitpunkt t2 versetzt. Dabei wird automatisch eine Relation R3 von dem zweiten Lösungsprinzip LP2 in dem Maschinenprojekt zu einer korrespondierenden Klasse LP2 in der Bibliothek BIB gezogen. Außerdem wird eine Verbindung R4 zwischen der konkreten Ausgestaltung KA2 des zweiten Lösungsprinzips LP2 und einer Instanz P auf der Bibliotheksebene gezogen. Diese Instanz P beschreibt allgemein eine konkrete Ausgestaltung MA des Lösungsprinzips LP2 bzw. der entsprechenden Klasse K in der Bibliothek BIB. Somit steht für zukünftige Ausgestaltungen bzw. Instanziierungen für die konkrete Klasse LP2 die konkrete Ausgestaltung MA zur Verfügung.

Entsprechend dem Prinzip von FIG 4 entsteht damit alleine durch den Projektfortschritt ein weiteres mechatronisches Modul. In vorteilhafter Weise baut sich die Bibliothek durch das Aufspannen der Black Box BB, dem gleichzeitigen Wissen, zu welchem Lösungsprinzip (somit auch die Klassifizierung in der Bibliothek) die im Weiteren ausdetaillierten Modelle gehören, mit jeder Neuentwicklung im Rahmen eines Maschinenprojekts weiter auf. Dadurch ist es möglich, die großen Aufwände bei Entwicklungsprojekten im Voraus einzusparen.

## Patentansprüche

1. Verfahren zum Herstellen einer Maschine
**gekennzeichnet durch**
- Vorgeben einer Schnittstelle (S) zwischen einer konkreten Ausgestaltung (KA1) einer ersten Komponente und einer zweiten Komponente, welche noch nicht konkret ausgestaltet ist, oder einer abstrakten Schnittstelle zwischen der ersten und zweiten Komponente, welche noch nicht konkret ausgestaltet ist aber eine Klassifizierung besitzt, auf der Basis dieser Klassifizierung,
- Vorgeben eines Lösungsprinzips (LP2) für die zweite Komponente der Maschine,
- automatisiertes Ermitteln einer abstrakten Ausgestaltung (BB) der zweiten Komponente anhand des Lösungsprinzips (LP2) und der Schnittstelle (S) und
- Fertigen der Maschine mit einer konkreten Ausgestaltung (KA2) der zweiten Komponente auf der Basis der abstrakten Ausgestaltung (BB).

2. Verfahren nach Anspruch 1, wobei die konkrete Ausgestaltung (KA2) der zweiten Komponente dadurch erreicht wird, dass eine Bibliothek (BIB) mit Bezug auf die abstrakte Ausgestaltung (BB) durchsucht wird.

3. Verfahren nach Anspruch 2, wobei zum Erreichen der konkreten Ausgestaltung (KA2) der zweiten Komponente mehrere Ausgestaltungsmöglichkeiten aus der Bibliothek (BIB) automatisch zur Auswahl vorgeschlagen werden.

4. Verfahren nach einem der vorhergehenden Ansprüche, wobei das Lösungsprinzip (LP2) eine mechanische, elektrische oder steuerungstechnische Funktion umsetzt.

5. Verfahren nach einem der vorhergehenden Ansprüche, wobei die konkrete Ausgestaltung (KA2) der zweiten Komponente ein elektrisches Modell und/oder ein mechanisches Modell und/oder ein Automatisierungsmodell aufweist.

6. Verfahren nach einem der vorhergehenden Ansprüche, wobei die Schnittstelle (S) einen Transport eines Materials und/oder eine Übertragung eines elektrischen Signals betrifft.

7. Verfahren nach einem der Ansprüche 1 und 3 bis 6, wobei das Lösungsprinzip (LP2) in einer Bibliothek (BIB) einer Klasse (K) von mechatronischen Modulen zugeordnet wird.

8. Verfahren nach Anspruch 7, wobei manuell aus der abstrakten Ausgestaltung (BB) die konkrete Ausgestaltung (KA2) gebildet wird und dadurch automatisch ein entsprechendes mechatronisches Modul in der Klasse (K) erzeugt wird.

9. Verfahren nach Anspruch 8, wobei für das automatische Erzeugen des mechatronischen Moduls eine Relation (R3) zwischen dem Lösungsprinzip (LP2) und der Klasse in der Bibliothek (BIB) sowie eine Relation (R4) zwischen Modellen (MM, EM, AM) der konkreten Ausgestaltung (KA2) der zweiten Komponente und einer Instanz (P) der Klasse (K) in der Bibliothek (BIB) gezogen werden.

10. Vorrichtung zum Herstellen einer Maschine
**gekennzeichnet durch**
- eine Ermittlungseinrichtung zum automatisierten Ermitteln einer abstrakten Ausgestaltung (BB) einer zweiten Komponente der Maschine, welche Komponente noch nicht konkret ausgestaltet ist, anhand eines vorgegebenen Lösungsprinzips (LP2) und einer vorgegebenen Schnittstelle (S) zwischen der zweiten Komponente und einer konkreten Ausgestaltung (KA1) der ersten Komponente der Maschine und
- eine Fertigungseinrichtung zum Fertigen der Maschine mit einer konkreten Ausgestaltung (KA2) der zweiten Komponente, die auf der abstrakten Ausgestaltung (BB) beruht.
